# EUROPEAN PATENT APPLICATION

(11) **EP 2 806 379 A1**
(43) Date of publication of application: **26.11.2014**
(21) Application number: 14167451.5
(22) Date of filing: 07.05.2014
(51) Int. Cl.: G06Q 10/06

(54) **Operator competency management**

(30) Priority: 24.05.2013 US 201313902098
(71) Applicant: Honeywell International Inc., Morristown, NJ 07962-2245 (US)
(72) Inventor: Watt, Michael, Morristown, NJ New Jersey 07962-2245 (US); Laberge, Jason Charles, Morristown, NJ New Jersey 07692-2245 (US); Thiruvengada, Hari, Morristown, NJ New Jersey 07962-2245 (US); Henderson, Peter John, Morristown, NJ New Jersey 07962-2245 (US); Desjarlais, Paul Daniel, Morristown, NJ New Jersey 07962-2245 (US)
(74) Representative: Houghton, Mark Phillip

(57) **Abstract**

A method (100) of operator competency management includes providing (101) a computing system having a processor running a software application. The software application implements an Operator Competency Model (OCM) which includes a simulated competency exercise including a plurality of simulated tasks for an operator in a processing facility running a physical process, wherein a competency for each simulated task is mapped to an assessment tool, wherein the assessment tools collectively include at least one subjective assessment tool and at least one automatically generated assessment tool. Responsive (102) to the operator performing the simulated competency exercise, the performance of the operator is evaluated using respective ones of the assessment tools for the simulated tasks to generate competency data for the operator. The competency data includes an automatically generated portion corresponding to data generated by the automatically generated assessment tool and a subjective assessment portion corresponding to data generated by the subjective assessment tool.

## Description

### FIELD

Disclosed embodiments relate to systems and methods for verifying the competence of operators in processing facilities which operate physical processes that involve tangible materials.

### BACKGROUND

Processing facilities which operate physical processes that involve tangible materials, such as manufacturing plants, chemical plants and oil refineries, are typically managed using process control systems. Valves, pumps, motors, heating/cooling devices, and other industrial equipment typically perform actions needed to process materials in the processing facilities. Among other functions, the process control systems often manage the use of the industrial equipment in the processing facilities.

A processing facility generally has a control room with displays for displaying process parameters (or process variables) including temperatures, pressures, fluid flow rates and flow levels, operating positions of key valves, pumps and other equipment, etc, some of which are selected as key performance indicators (KPIs). In addition, operators in the control room (console operators) can control various aspects of the plant operation, typically including overriding automatic process control. Generally in a plant operation scenario, the plant operator desires operating conditions such that the plant always operates at its "optimal" operating point (i.e. where the profit associated with the process is at a maximum, which can correspond to the amount of product generated) and thus closer to the alarm limits.

Advanced controllers often use model-based control techniques to control the operation of the industrial equipment to maximize profit. Numerous process simulation systems/software (e.g., Honeywell UNISIM, HYSYS, Aspen OTS, FANTOFT, etc.) exist that perform steady-state and dynamic simulations. These simulations often lead to optimizations and improvement throughout a plant lifecycle, which includes a conceptual design stage, a plant design stage, control implementation stage, procedure development stage, operator training stage, and a production stage.

Regarding operator training, the trend is for fewer operators to manage complex process operations with a broader scope of responsibility than in the past. The nearly universal introduction of advanced and supervisory process control schemes coupled with extended time between turnarounds for most modern process technologies means fewer operators have their own personal experience with abnormal, infrequent, or unusual process operations that can happen in real time, at any time.

To combat these challenges, more and more processing facilities (e.g., manufacturing plants) are turning to operator training simulators (OTS). An OTS is an ideal place for operators to practice as it provides a venue for performing unfamiliar process and control tasks from the safety of the classroom. Mistakes can be made and lessons can be learned from the mistakes without any real-life consequences. OTS are fast becoming a standard deliverable in capital projects within process industries, particularly those that involve new process or control infrastructure, either as a new build, retrofit, or expansion. For some companies it is becoming standard practice to employ an OTS across the manufacturing plants of the company either through localized or company-sponsored training investments.

Simulation software such as UNISIM by Honeywell International provide OTS which allow an instructor (or supervisor) to evaluate and track specific competencies automatically generated for an operator at a processing facility. One example competency is the ability to properly and timely respond to alarms generated by the simulation system for KPIs after moving beyond their associated alarm limit(s). However, known simulation software does not provide the capability to evaluate operator competencies which cannot be evaluated using OTS, such as activities that can only be subjectively measured (e.g., how effectively an operator is able to communicate a particular situation with their instructor/supervisor), and thus may be incapable of providing the instructor sufficient information to determine if the individual is a sufficiently competent operator to consistently provide the desired performance level for the process.

### SUMMARY

This Summary is provided to introduce a brief selection of disclosed concepts in a simplified form that are further described below in the Detailed Description including the drawings provided. This Summary is not intended to limit the claimed subject matter's scope.

Disclosed embodiments provide methods and systems of operator competency management which fill the operator competency gap described above by enabling the evaluation of operator competencies beyond those which can be evaluated by operator training simulators (OTS) employing simulator-based training (SBT), including activities that can only be subjectively measured. By being able to include subjectively assessed measures, such as how effectively an operator is able to communicate a particular situation with their instructor/supervisor (hereafter the supervisor), additional operator competency information is provided as compared to known OTS to more rapidly and more accurately determine if a given operator is sufficiently competent to consistently provide the desired performance level for the process. Third party assessment systems, such as by an online course, may be included as an additional assessment tool besides OTS employing SBT and subjective assessments.

Disclosed embodiments include methods of operator competency management including providing a system controller including a computing system having a processor and associated memory running a software application. The software application implements an operator competency model (OCM) which includes at least one simulated competency exercise including a plurality of simulated tasks for an operator in a processing facility running a physical process. A competency for each of the simulated tasks is mapped to an assessment tool, where the assessment tools collectively include at least one subjective assessment tool and at least one automatically generated assessment tool. The simulated tasks typically comprise a set of core components skills, knowledge, etc. referred to herein and shown in the Examples as "behavioral indicators" that allow evaluation of the competency of an operator, and can include different simulated task sets for console operators that work in a control room of a processing facility and as compared to the simulated tasks for field operators that work on the floor of the processing facility.

Responsive to the operator performing the simulated competency exercise, the performance of the operator is evaluated for the simulated tasks using respective ones of the assessment tools to generate competency data for the operator. The competency data includes an automatically generated portion corresponding to data generated by the automatically generated assessment tool and a subjective assessment portion corresponding to data generated by the subjective assessment tool (by a supervisor or instructor).

The OCM can be customizable to allow a supervisor to define (i.e., change, add or subtract from) any of the plurality of simulated tasks, and to define the assessment tools to determine how the individual competencies for the respective tasks can be evaluated or otherwise demonstrated. Disclosed embodiments also allow tracking an operator's progress against each defined task, and progress over a period time.

### BRIEF DESCRIPTION OF THE DRAWINGS

FIG. 1 is a flow chart that shows steps in a method of operator competency management, according to an example embodiment.
FIG. 2 is a schematic block diagram of an example operator competency management system, according to an example embodiment.
FIG. 3 is a screenshot for an example method of operator competency management showing an OPC being defined by a supervisor, according to an example embodiment.
FIGs. 4A and 4B are screenshots for an example method of operator competency management where a competency assessment approach is defined, such as by a supervisor, according to an example embodiment.
FIG. 5 is a screenshot for an example method of operator competency management where a task assessment approach is defined, according to an example embodiment.
FIG. 6 is a screenshot for an example method of operator competency management where an outcome assessment approach is defined generally using trainee performance tables (TPTs), according to an example embodiment.
FIG. 7A is a screenshot for an example method of operator competency management where the operator's performance is scored during and/or after the exercise, according to an example embodiment.
FIG. 7B is a screenshot for an example method of operator competency management where competency scoring can be done by the supervisor using a scoring display, according to an example embodiment.

### DETAILED DESCRIPTION

Disclosed embodiments are described with reference to the attached figures, wherein like reference numerals are used throughout the figures to designate similar or equivalent elements. The figures are not drawn to scale and they are provided merely to illustrate certain disclosed aspects. Several disclosed aspects are described below with reference to example applications for illustration. It should be understood that numerous specific details, relationships, and methods are set forth to provide a full understanding of the disclosed embodiments. One having ordinary skill in the relevant art, however, will readily recognize that the subject matter disclosed herein can be practiced without one or more of the specific details or with other methods. In other instances, well-known structures or operations are not shown in detail to avoid obscuring certain aspects. This Disclosure is not limited by the illustrated ordering of acts or events, as some acts may occur in different orders and/or concurrently with other acts or events. Furthermore, not all illustrated acts or events are required to implement a methodology in accordance with the embodiments disclosed herein.

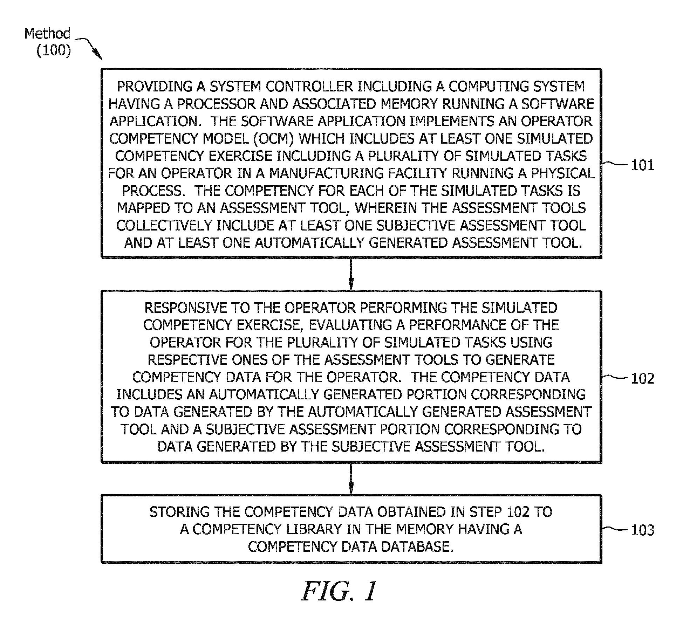

FIG. 1 is a flow chart that shows steps in a method 100 of operator competency management, according to an example embodiment. Step 101 comprises providing a system controller including a computing system having a processor and associated memory running a software application. The software application implements an OCM which includes at least one simulated competency exercise including a plurality of simulated tasks (e.g., a defined task checklist) for an operator in a processing facility running a physical process. A competency for each of the simulated tasks is mapped to an assessment tool, wherein the assessment tools collectively include at least one subjective assessment tool and at least one automatically generated assessment tool. Each competency generally has a plurality of behavioral indicators that allow evaluation.

The automatically generated portion can include a TPT (also known as a Key process variable (KPV)) which assesses how well the operator can keep at least one key process variable (i.e., a key performance indicator (KPI)) for the process within one predefined limit or a range of predefined limits. An example of an automatically generated assessment is a competency assessment made by an OTS employing SBT, for example how quickly an operator responds to an alarm condition for a particular processor parameter. There are other evaluation tools that can automatically generate a score in addition to a TPT. For example, a feature can be provided that evaluates how an operator can follow a predefined procedure, as well as an evaluation feature based on multiple-choice tests. Third party assessment systems, such as an online course, may be in addition to OTS employing SBT.

An example of a subjective assessment is a competency assessment for a non-OTS/SBT task which cannot be automatically evaluated or assessed, such as how effectively an operator is able to communicate a particular situation their supervisor. Other example non-OTS/SBT tasks include the ability to perform lockout/tagout procedures on field equipment (e.g., a pump or a burner) that they service as part of their job, and the ability for a field operator to clearly describe visual plant conditions to a console operator, such as due to an equipment malfunction or limited visibility of a piece of equipment from the control room where a console operator may have to rely on a field operator to accurately describe the state of a piece of equipment in the field.

The OCM can be user alterable (customizable) to allow a supervisor or other authorized individual to add, subtract or change any of the simulated tasks and/or assessment tools such as defining the competency assessment approach, which can include competency level assessments including subjective ratings. Although the OCM can allow changing simulated tasks, the simulated tasks may also be modified in an accompanying simulation (e.g., UNISIM Operations) software. For example, a commercially available operator competency model may be used as the basis for customization. Disclosed simulated competency exercises can include a simulated competency exercise for when the operator is a console operator and a different simulated competency exercise when the operator is a field (line) operator, such as based on virtual reality when the operator is a field operator. Disclosed simulated competency exercises can also be used to assess competency of supervisors, contractors, or generally anyone that is working within a processing facility (e.g., plant).

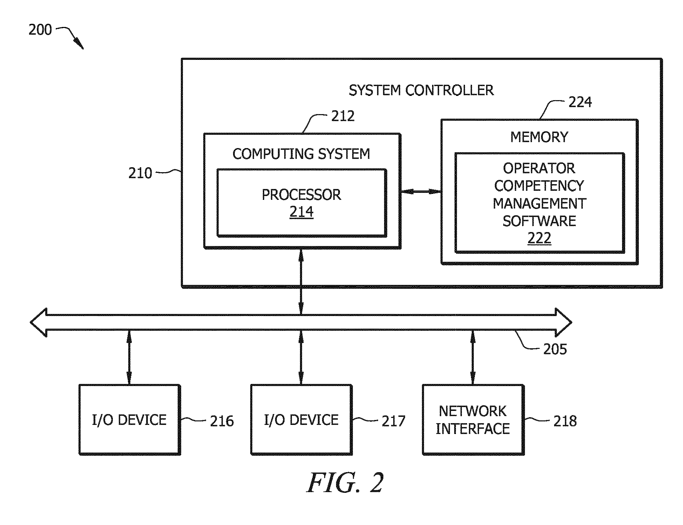

Step 102 comprises responsive to the operator performing the simulated competency exercise, evaluating a performance of the operator for the plurality of simulated tasks using respective ones of the assessment tools to generate competency data for the operator. As noted above, competency can be evaluated based on a plurality of behavioral indicators. The operator can perform the simulated competency exercise using an input/output (I/O) device configured for an operator to participate over a communications bus, including over both wired or wireless media, such as shown in FIG. 2 described below. Configuring the I/O device for an operator can include blocking of the specialized access privileges for modifying the OCM or providing subjective evaluations reserved for the supervisor as described below.

The competency data may be time stamped. With time stamping of the competency data, a supervisor or other individual has the ability to track an operator's progress against each task, as well as the overall progress of a group of users (operators) against each task. The competency data includes an automatically generated portion corresponding to data generated by the automatically generated assessment tool and a subjective assessment portion (e.g., a process supervisor's ratings) corresponding to data generated by the subjective assessment tool.

Step 103 comprises storing the competency data obtained in step 102 to a competency library having a competency data database in a memory associated with the system controller. The subjective assessment data is entered into the competency data database typically by the process supervisor using an I/O device configured for a supervisor participating over a communications bus, such as shown in FIG. 2 described below. The supervisor can provide subjective assessments as well as comments (e.g., one or more descriptive sentences) for competencies for particular tasks. Configuring the I/O device for a supervisor can include establishing specialized access privileges for modifying the OCM and providing subjective evaluations for operators. The competency data can be used to generate an overall numerical score for the competency exercise which can be compared to a predetermined score to automatically determining whether the operator is sufficiently competent.

Disclosed embodiments can include a software interface to allow external assessment software (e.g., UNISIM simulation software from Honeywell International, external online courses, etc) to record the operator's scores and detailed logs associated with the mapped competency data within the competency data database. Detailed training records in the competency library's competency data database can be available for future reference by the supervisor, operator, or other interested individual. Disclosed embodiments can allow a supervisor to start the software application and view an overall status of competency for each operator in the system, or a detailed competency status task by task for an operator.

FIG. 2 is a schematic block diagram of an example operator competency management system 200, according to an example embodiment. System 200 includes a system controller 210 including a computing system 212 having a processor 214 and associated memory 224 shown storing a software application shown as operator competency management software 222. The system controller 210 issues control signals which control operations of the system 200. Processor 214 may comprise a general-purpose or specific-purpose digital signal processor (DSP) or a microcontroller. Memory 224 can be configured to store information, data, instructions, and/or software code. Memory 224 can include any combination of volatile memory and/or non-volatile memory, such as non-volatile memory selected from read only memory (ROM), static random access memory (SRAM), electrically erasable programmable ROM (EEPROM), or flash memory.

The system controller running the operator competency management software 222 can implement method 100 described above including an OCM which includes at least one simulated competency exercise including a plurality of simulated tasks for an operator in a processing facility running a physical process. Each of the simulated tasks are mapped to a assessment tool which provides a measure of operator competency. The competency data includes an automatically generated portion corresponding to the automatically generated assessment tool(s) and a subjective assessment portion corresponding to the data generated by the subjective assessment tool.

System 200 includes at least a first input/output (I/O) device 216 including a data entry device communicably coupled to the system controller 210 over the data bus 205 able to transmit and receive data, information, and instructions within network(s) of an organization including for displaying information for the operator to perform the simulated competency exercise and for coupling inputs from the operator inputs to the system controller 210. Data bus 205 can operate over a wireless (e.g., RF) or a wired or other media including an optical network. System 200 also includes at least a second input/output device 217 including a data entry device communicably coupled to the system controller 210 over the data bus 205 able to transmit and receive data, information, and instructions within network(s) of an organization including for inputting inputs from a supervisor to provide the subjective assessment portion corresponding to the subjective assessment data to the system controller 210.

I/O devices 216, 217 may include input devices such as keyboards, keypads, cursor control devices, or other data entry devices. The input devices may be used for entering information in memory 224. I/O devices 216, 217 also include output devices such as computer monitors, audio output devices, printers, or other peripheral devices for communicating information to the user (operator or supervisor).

Network interface 218 allows the system 200 to communicate with other devices via a variety of network types that are associated with the processing facility. For example, system 200 may be in communication with an integrated network used by the processing facility. Network interface 218 can enable 3rd party software tools to interface with system 200 to allow them to send scores from other assessments to a disclosed competency library.

System 200 may be replicated at a plurality of locations in the processing facility. Portions of system 200 may be located in remote areas throughout a processing facility, depending on the desired customer' configuration.

Operator competency management software 222 or other software or logic code including executable logical instructions as described herein, can be embodied in a computer program product stored on a non-transitory machine readable medium for execution by any suitable processing device, such as processor 214. The non-transitory machine readable medium as described herein can include one or more suitable physical media components that can store the software, programs, or computer code for a measurable length of time.

### EXAMPLES

Disclosed embodiments are further illustrated by the following specific Examples, which should not be construed as limiting the scope or content of this Disclosure in any way.

In this generalized example, the supervisor (acting as an instructor) customizes a default OCM that can be a commercially available OCM. The supervisor maps the respective operator competencies to a combination of assessment tools including at least one subjective assessment tool, generally selected from UNISIM Operations (USO) training modules, third party training modules, and subjective assessments. To set up a training module, one can configure a USO model and initial conditions snapshot to load. For example if one wants to load the steady state simulation for a particular piece of processing equipment Unit B, the individual configures one or more assessment tools/methods such as a TPT (or a KPV table as described above) or procedure checklist (as described above), and configures one or more subjective assessments (by an individual) that can be triggered on a certain time or simulation event.

In the competency library, after the mapping of respective competencies to assessment tools is completed, the supervisor can configure a weighting for each of the assessments mapped to the competency. For example, a student may be required to get 80% on the USO training module "P62 Reflux Pump Failure" to achieve the competency. The operator trainee can load/complete an assessment by starting the appropriate assessment tool/system (for example load a USO training module) and perform the training/assessment. At the completion of the assessment by the operator, the assessment system automatically reports the operator's score to the competency library software. In the USO training module case (and for other assessment systems), in addition to a score, a detailed report can be generated that provides the details of the assessments, and related information made during the training module. The training module can then provide reports on the progress of operators against the competency library.

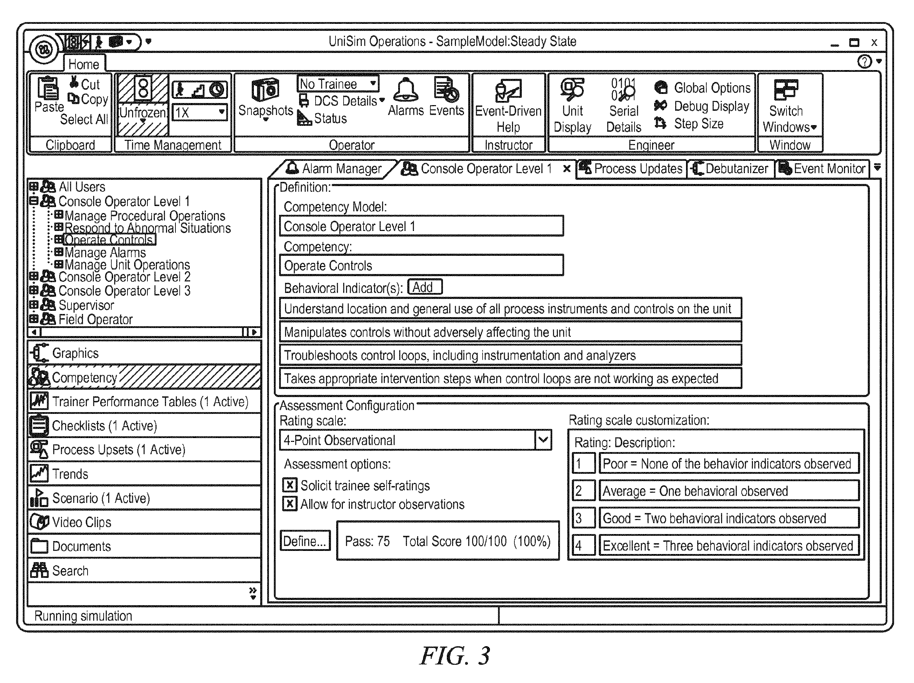

A specific method of OCM is described below as an example 12 step process flow. In step 1 depicted by the screenshot shown in FIG. 3, an OCM is defined by the supervisor, where the OCM can begin from a commercially available default operator competency model that is then customized by the supervisor or other authorized user of the software application by adding, deleting or changing competencies, behavioral indicators and/or assessment tools. As shown in FIG. 3, the competency includes a plurality of behavioral indicators that can be customized. Alternatively, the OCM can be generated from the ground up in its entirety. The model can include multiple competency sub-models including model portions by role (e.g., for console operators and for line operators) or include a USO model.

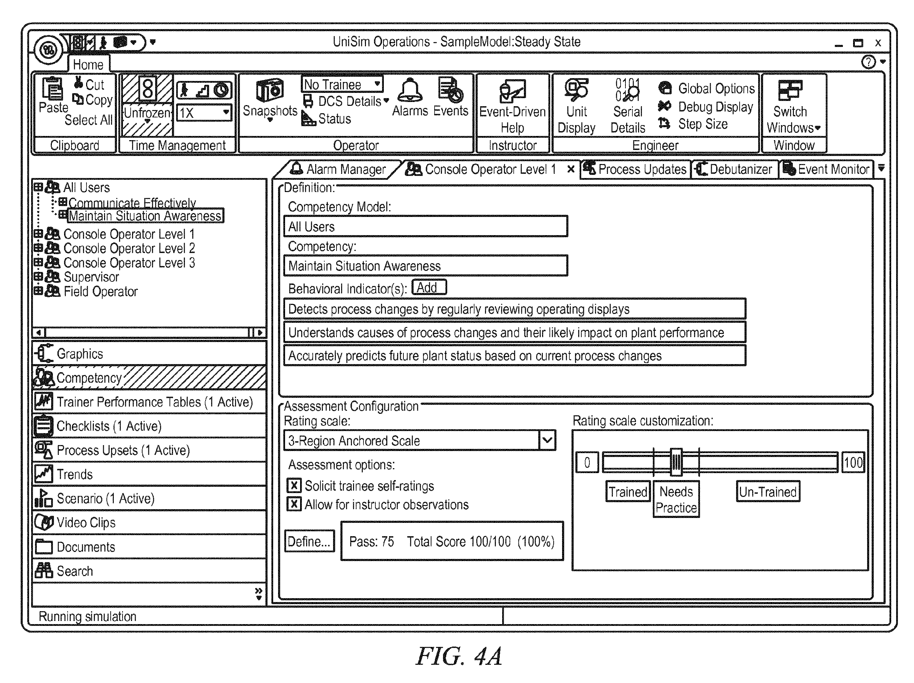

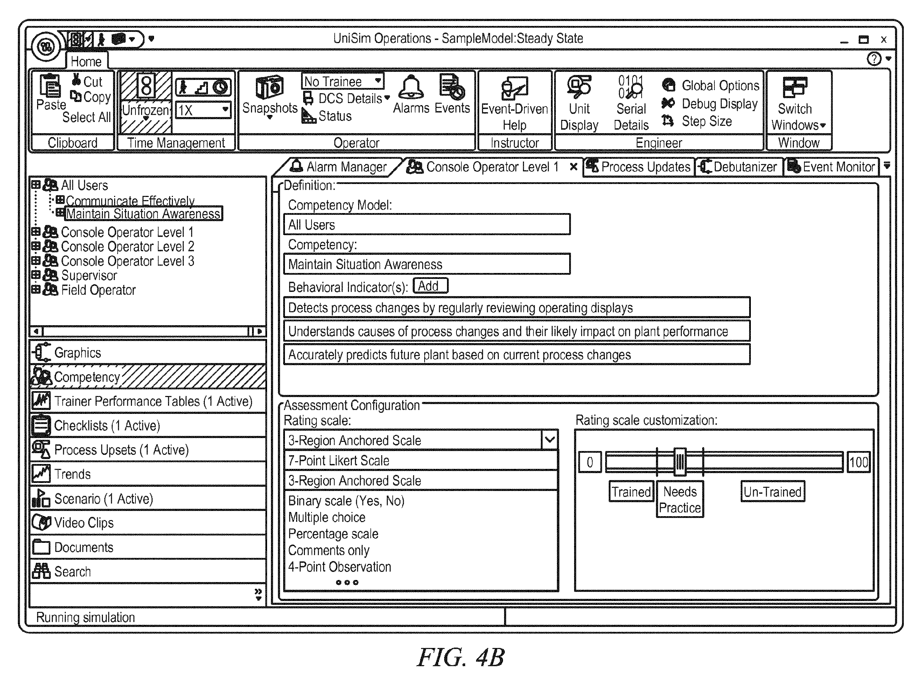

Step 2 is depicted by the screenshot shown in FIG. 4A and by the screenshot shown in FIG. 4B where a competency assessment approach is defined, such as by a supervisor. Competency-level assessments include subjective ratings. Subjective behavioral indicators are shown including "detects process changes by regularly reviewing operating displays", "understands causes of process changes and their likely impact on plant performance", and "accurately predicts future plant status based on current process changes". Different assessment approaches can be configured for each competency. A variety of subjective rating scales are shown being supported, including multiple choice, percentage scale, and comments only.

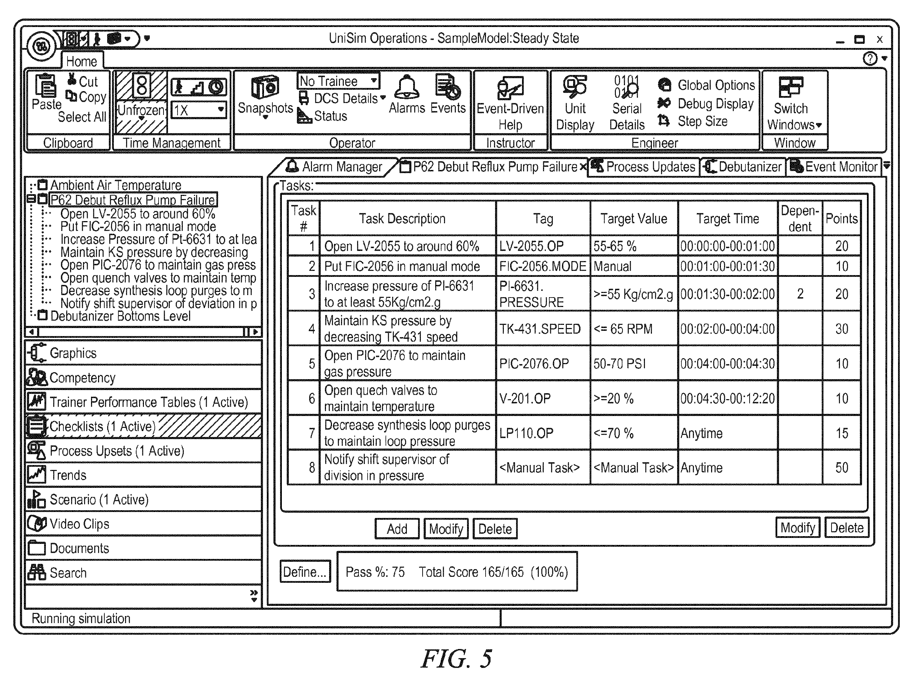

Step 3 is depicted by the screenshot shown in FIG. 5 where a task assessment approach is defined. Task checklists can be defined by adding/configuring tasks in sequence. Some tasks are assessed manually (scored by a supervisor) and some tasks are assessed automatically (e.g., based on a tag/target value). Tasks can be dependent. Tasks can be triggered by target times (time window) or events. Tasks can be assigned points based on their programmed predetermined importance so that some tasks are weighted more relative to other tasks.

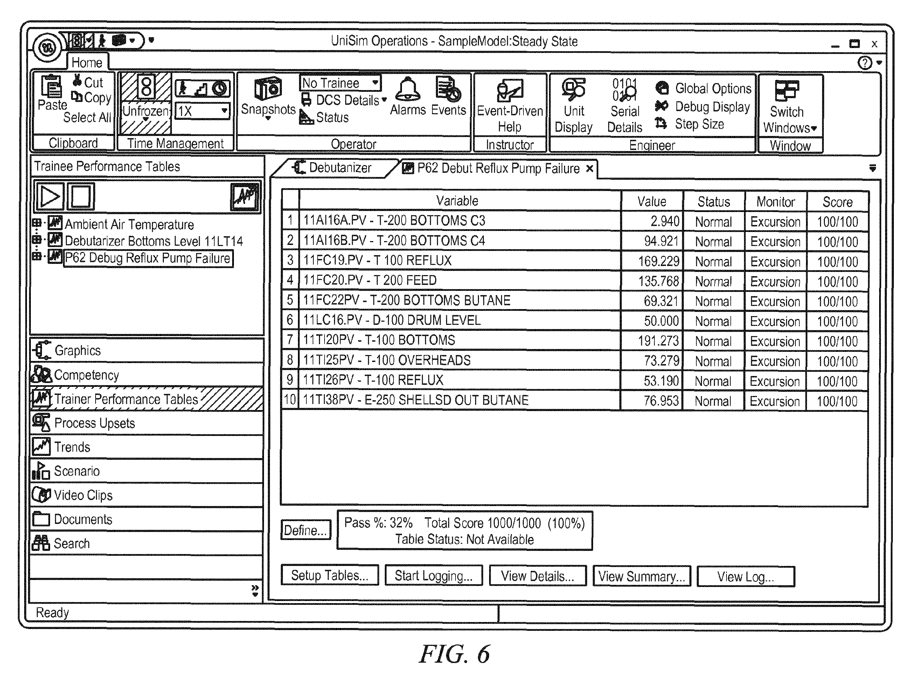

Step 4 is depicted by the screenshot shown in FIG. 6 where an outcome assessment approach is defined generally using a TPT table (or KPV table). TPTs can be used to define outcome assessments. TPTs can be structured around key plant KPIs or other model variables, such as a controller process variable (PV) defined by the supervisor's discretion.

In step 5 the scenario library is viewed by the supervisor for re-use potential and coverage. A scenario library may be shown under each competency to show coverage. Exercises can be mapped to competencies based on learning objectives and curriculum requirements. A scenario can show up under more than one competency depending on the mapping. Color coding (e.g., red) can be used to have a display show competencies with no scenario coverage. A scenario library can be included with standard models. Scenario templates can also be included that can be customized. The scenario library and templates can include pre-defined TPTs, checklists, and competency assessments.

In step 6 a scenario is opened from a competency library stored in memory or a scenario list to edit. Operator assessment can be defined for each scenario via events. TPTs are associated with scenarios using an existing approach, and can be invoked as an event. Checklist assessment can be triggered as an event in a scenario. Competency assessment can also be triggered as an event and can follow upsets in the scenario. For example, a UNISIM Training Module can trigger a subjective assessment at a certain simulation time or when a certain event has happened during the simulation session. Competency assessments can also be triggered at the end of the scenario so that the supervisor can consider overall operator' performance.

In step 7 a new exercise can be created using existing scenarios and assessment methods. As noted above, exercises can be invoked using an existing approach. The supervisor can elect scenario(s) to include in the exercise. Selecting scenarios creates implicit mapping to competencies and subjective assessments, checklists, and TPTs.

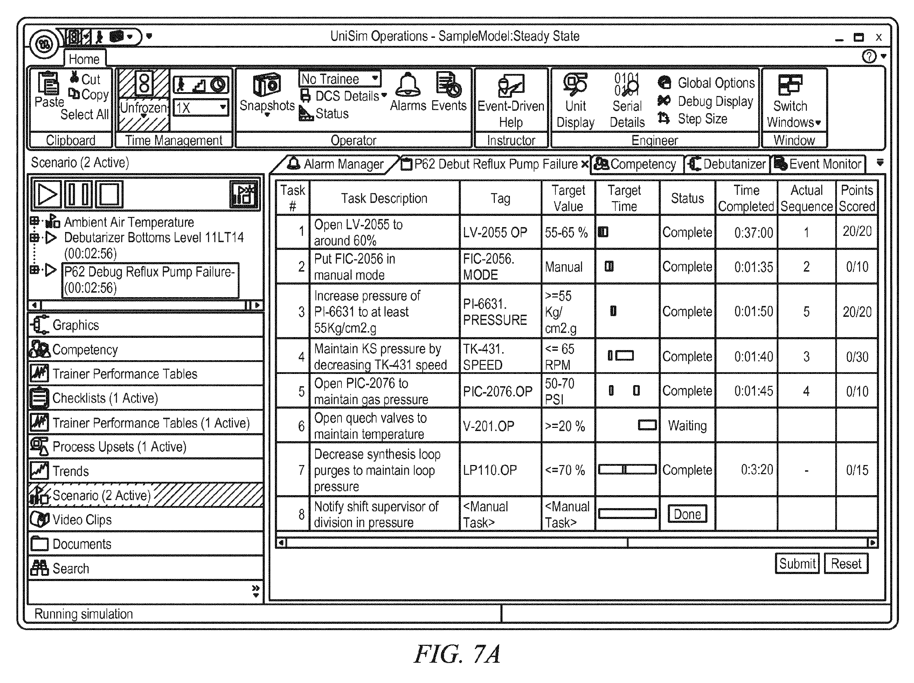

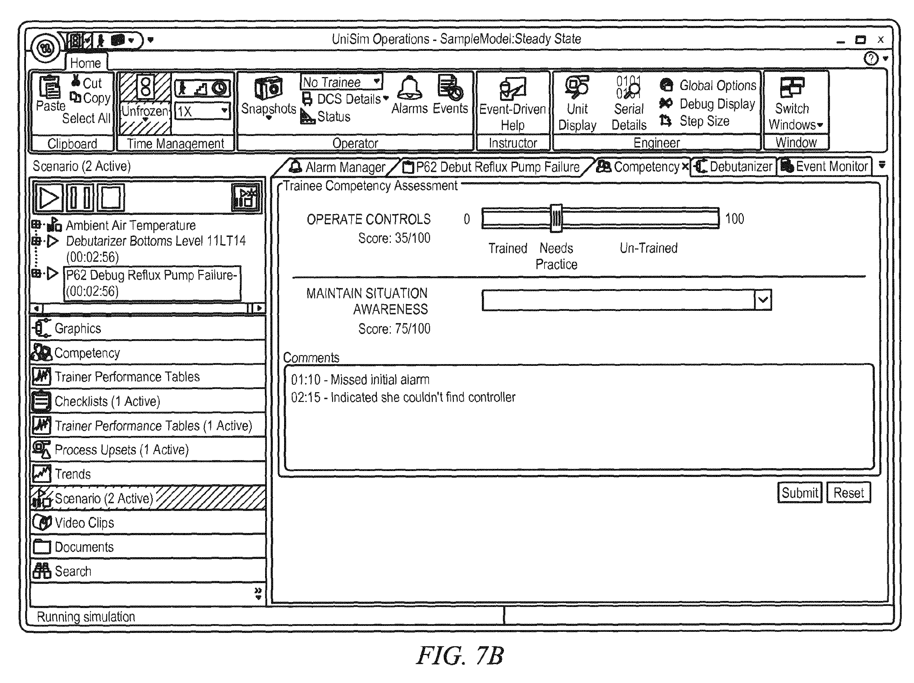

Step 8 comprises the operator completing the training exercise, typically by entering responses using a keyboard and mouse. Step 9 is depicted by the screenshot shown in FIG. 7A where the operator's performance is scored during and/or after exercise (depending on configuration). For task checklists, as noted above, some tasks are scored automatically, but other tasks (such as communications activities shown as "notifying shift supervisor of deviation in pressure") are manually scored by the supervisor based on the supervisor's observations. The screenshot shown in FIG. 7B shows ccompetency scoring can be performed by the supervisor using a scoring display. The competencies shown and assessment scale(s) used can be determined by the scenarios and the competency configurations.

Step 10 comprises a self-evaluation of the operator's performance after exercise. When configured, operators can provide a self-evaluation of their competencies. In step 11 the operator provides feedback on the exercise. An operator providing feedback on an exercise can improve the training program's effectiveness. If configured, the operator can provide ratings and feedback on the exercise. Instructors can customize the questions and rating scales used. This can be useful to track overall training program effectiveness and to identify continuous improvement opportunities. In step 12, the trainee performance is reviewed after the exercise and feedback provided. Instructors can use a performance dashboard to provide feedback to the operator. Instructors can also use the competency library to track the progress of groups or individuals against the competency library. The feedback can provide the basis for coaching and any recommended interventions. Interventions can be any number of things such as repeat the exercise, review related training modules/procedures, complete an ad-hoc exercise, and complete a related training exercise from the operator competency library.

While various disclosed embodiments have been described above, it should be understood that they have been presented by way of example only, and not limitation. Numerous changes to the subject matter disclosed herein can be made in accordance with this Disclosure without departing from the spirit or scope of this Disclosure. In addition, while a particular feature may have been disclosed with respect to only one of several implementations, such feature may be combined with one or more other features of the other implementations as may be desired and advantageous for any given or particular application.

As will be appreciated by one skilled in the art, the subject matter disclosed herein may be embodied as a system, method or computer program product. Accordingly, this Disclosure can take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, this Disclosure may take the form of a computer program product embodied in any tangible medium of expression having computer usable program code embodied in the medium.

## Claims

1. A method (100) of operator competency management, comprising:
providing (101) a computing system having a processor and associated memory running a software application, said software application implementing:
an Operator Competency Model (OCM) which includes at least one simulated competency exercise including a plurality of simulated tasks for an operator in a processing facility running a physical process, wherein a competency for each of said plurality of simulated tasks is mapped to an assessment tool, wherein said assessment tools collectively include at least one subjective assessment tool and at least one automatically generated assessment tool;
responsive (102) to said operator performing said simulated competency exercise, evaluating a performance of said operator for said plurality of simulated tasks using respective ones of said assessment tools to generate competency data for said operator,
wherein said competency data includes an automatically generated portion corresponding to data generated by said automatically generated assessment tool and a subjective assessment portion corresponding to data generated by said subjective assessment tool.

2. The method of claim 1, wherein said OCM is user alterable.

3. The method of claim 1, further comprising:
storing (103) said competency data to a competency library data database in said memory, wherein said subjective assessment portion is entered by a supervisor using an input/output (I/O) device including a data entry device.

4. The method of claim 1, further comprising generating a numerical score from said competency data and comparing said numerical score to a predetermined score to automatically determine whether said operator is deemed competent.

5. The method of claim 1, wherein said simulated competency exercise includes a first simulated competency exercise for when said operator is a console operator and a second simulated competency exercise when said operator is a field operator.

6. A computer program product, comprising:
executable code transportable by a non-transitory machine readable medium, wherein execution of said code by at least one programmable computing device causes said computing device to perform a sequence of steps for operator competency management for operators involved in a physical process run in a processing facility including a plurality of controlled process variables, said sequence of steps comprising:
running an Operator Competency Model (OCM) which includes at least one simulated competency exercise including a plurality of simulated tasks for an operator in said processing facility running said physical process, wherein each of said plurality of simulated tasks are mapped to an assessment tool, wherein said assessment tools collectively include at least one subjective assessment tool and at least one automatically generated assessment tool;
responsive to said operator performing said simulated competency exercise, evaluating a performance of said operator for said plurality of simulated tasks using respective ones of said assessment tools to generate competency data for said operator,
wherein said competency data includes an automatically generated portion corresponding to data generated by said automatically generated assessment tool and a subjective assessment portion corresponding to data generated by said subjective assessment tool.

7. The computer program product of claim 6, wherein said OCM is user alterable.

8. The computer program product of claim 6, wherein said software application further implements entering said subjective assessment portion transmitted by a supervisor and storing said competency data to a competency library data database in said memory.

9. A simulation system (200) for operator competency management for a processing facility running a physical process, comprising:
a system controller (210) including a computing system (212) having a processor (214) and associated memory (224) storing a software application (222), said system controller running said software application implementing:
an Operator Competency Model (OCM) which includes at least one simulated competency exercise including a plurality of simulated tasks for an operator in said processing facility running said physical process, wherein each of said plurality of simulated tasks are mapped to an assessment tool, wherein said assessment tools collectively include at least one subjective assessment tool and at least one automatically generated assessment tool;
responsive to said operator performing said simulated competency exercise, evaluating a performance of said operator for said plurality of simulated tasks using respective ones of said assessment tools to generate competency data for said operator,
wherein said competency data includes an automatically generated portion corresponding to data generated by said automatically generated assessment tool and a subjective assessment portion corresponding to data generated by said subjective assessment tool;
at least one first input/output device (216) including a data entry device communicably coupled to said system controller for displaying information for said operator performing said simulated competency exercise and for coupling inputs from said operator to said system controller, and
at least one second input/output device (217) including a data entry device communicably coupled to said system controller for inputting inputs from a supervisor to provide said subjective assessment portion to said system controller.

10. The simulation system of claim 9, wherein said OCM is user alterable.

11. The simulation system of claim 9, wherein said automatically generated portion includes a trainee performance table (TPT) which assesses how well said operator can keep at least one process variable for said physical process within one predefined limit or a range of predefined limits.
